# EUROPEAN PATENT SPECIFICATION

(11) **EP 0 698 643 B1**
(45) Date of publication and mention of the grant of the patent: **11.11.1998**
(21) Application number: 95112242.3
(22) Date of filing: 03.08.1995
(51) Int. Cl.: C09D 5/16, C09D 133/06, C09D 193/04

(54) **Antifouling paint composition**
Fäulnisverhindernde Anstrichzusammensetzung
Composition de peinture antisalissure

(30) Priority: 23.08.1994 JP 198500/94
(43) Date of publication of application: 28.02.1996
(73) Proprietor: Dai Nippon Toryo Co., Ltd., Osaka (JP)
(72) Inventor: Tsuneta, Kazuyoshi, Nasu-gun, Tochigi-ken (JP); Iwase, Yoshiyuki, Nasu-gun, Tochigi-ken (JP); Nitta, Tomohisa, Nasu-gun, Tochigi-ken (JP); Taki, Toru, Nasu-gun,Tochigi-ken (JP); Hokamura, Sadakazu, Yamato-shi, Kanagawa-ken (JP); Sasaki, Hiroharu, Nasu-gun, Tochigi-ken (JP); Iitsuka, Shinichi, Nasu-gun, Tochigi-ken (JP)
(74) Representative: Wächtershäuser, Günter, Prof. Dr.

(56) References cited:
- EP-A- 0 289 481
- EP-A- 0 526 441

## Description

The present invention relates to an antifouling paint composition which exhibits an abrasion property in sea water. The paint composition contains no organotin and scarcely forms a skeleton layer and can form a coating film having an always active antifouling surface at its surface layer.

Various marine-organisms settle on the surface of exterior plates at the bottoms of ships, marine structures or fishing nets located below the sea water surface. This creates problems such that in the case of ships, efficient operation will thereby be hindered, and in the case of marine structures or fishing nets, the useful life will thereby be substantially shortened. As a measure to cope with such problems, it is common to employ underwater antifouling paints containing various antifouling agents.

Typical conventional antifouling paints include, for example, an insoluble matrix type antifouling paint having an antifouling agent incorporated to a vehicle component comprising a resin such as a vinyl resin, an alkyd resin or chlorinated rubber, which is insoluble in sea water, and rosin, and a soluble matrix type antifouling paint containing, as a vehicle component, a copolymer comprising, as a constituting component, a triorganotin-containing monomer which gradually undergoes hydrolysis in sea water, and having an antifouling agent incorporated, as the case requires.

However, with the insoluble matrix type antifouling paint which is designed to provide antifouling effects by dissolution of the antifouling agent together with rosin in sea water, constant antifouling effects for a long period of time can not be expected. Besides, after dissolution of rosin and the antifouling agent, the resin component insoluble in sea water will remain as a coating film and will form a skeleton structure. Thus, it has a drawback that especially when it is used for ships, the frictional resistance of the coated surface with the sea water increases to reduce the speed or to increase the costs for the fuel. Further, there has been an additional drawback that when a fresh antifouling coating material is coated on the old coating film remaining after elution of e.g. rosin, if the old coating film has a skeleton structure, the adhesion or the recoating property tends to be poor, and peeling is likely to occur. On the other hand, the above-mentioned soluble matrix type antifouling paint has problems from the viewpoint of hygienic safety and protection of environment since it contains an organotin component, although it has adequate antifouling effects.

Further, as an intermediate type between the above-mentioned two paints, an antifouling paint has recently been developed which contains, as vehicle components, a hydrolyzable polyester resin and a water-insoluble resin without using an organotin-containing resin (Japanese Examined Patent Publication JP-B-3046501 (No. 46501/1991) and Japanese Unexamined Patent Publication JP-A-4023020 (No. 23020/1992)). When this antifouling paint contains, as vehicle components, a single condensate of an oxyacid such as lactic acid, and a water-insoluble resin, it makes a paint excellent from the viewpoint of hygienic safety and protection of environment, since it contains no organotin. However, it has a drawback that since a water-insoluble resin is used, the resin component insoluble in sea water will remain and will form a skeleton structure, in the same manner as the above-mentioned insoluble matrix-type antifouling paint.

EP-A- 0289481 and 0526441 disclose marine paint compositions. However, there is no disclosure in either prior art documents, that as a binder, component (A) an acrylic resin has a glass transition temperature of -50 to 0°C.

It is an object of the present invention to overcome the above described drawbacks of conventional antifouling paints and to provide a paint composition which is capable of effectively preventing settlement of various marine-organisms on the surface of exterior plates at the bottoms of ships, marine structures or fishing nets located below the sea water surface, for a long period of time and which at the same time is excellent from the viewpoint of hygienic safety and protection of environment.

The present inventors have conducted a study to overcome the above-mentioned drawbacks and as a result have found that by using a certain specific binder, it is possible to obtain a coating composition which contains no organotin and which is capable of forming a coating film, whereby the coating film surface which is in contact with sea water will gradually partially dissolve and will be abraded by sea water so that a skeleton layer is scarcely formed, or even when formed, it will be a very thin skeleton layer, and accordingly an active antifouling surface will always be present at the surface layer, whereby the coating film will have an antifouling property for a long period of time and a good recoating property and is excellent in hygienic safety and protection of environment. The present invention has been accomplished on the basis of this discovery.

Thus, the present invention provides an antifouling paint composition free from organotin containing, as a binder, a mixture comprising (A) from 20 to 80 wt% of a water-insoluble and hydrophobic acrylic resin having a glass transition temperature of from -50 to 0°C and (B) from 80 to 20 wt% of a metal salt of rosin.

Now, the present invention will be described in detail.

The acrylic resin (A) constituting the binder of the paint composition of the present invention, is a water-insoluble and hydrophobic acrylic resin having a glass transition temperature (hereinafter referred to simply as "Tg") of from -50 to 0°C, preferably from -30 to -10°C.

If Tg is lower than the above range, the coating film tends to be readily abraded, whereby an antifouling property for a long period of time can hardly be expected. On the other hand, if it is too high, the flexibility of the coating film decreases, the coating film tends to be hardly abraded, and a skeleton layer is likely to form, such being undesirable.

The acrylic resin (A) is the one obtained by selecting and combining polymerizable unsaturated monomers so that the resulting resin will have a Tg within the above range and will be water-insoluble and hydrophobic and copolymerizing the mixture, for example, at a temperature of from 80 to 180°C for from 2 to 10 hours in the presence of a radical polymerization initiator.

As such polymerizable unsaturated monomers, monomers represented by the formula CH₂=C(R)-COOR' wherein R is hydrogen or a methyl group, and R' is a C₁₋₁₈ alkyl group or cycloalkyl group, or mixtures comprising such monomers as the main components, are preferred.

The polymerizable unsaturated monomers represented by the above formula include, for example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, 2-ethylhexyl (meth)acrylate, octyl (meth)acrylate, lauryl (meth)acrylate, stearyl (meth)acrylate, cyclohexyl (meth)acrylate, tert-butylcyclohexyl (meth)acrylate, cyclooctyl (meth)acrylate, and cyclododecyl (meth)acrylate.

In addition to such polymerizable unsaturated monomers of the above formula, aromatic monomers such as styrene and vinyl toluene, vinyl ester monomers such as vinyl acetate and vinyl pivalate, vinyl ether monomers such as ethyl vinyl ether and isobutyl vinyl ether, olefin monomers such as ethylene and propylene, (meth)acrylonitrile, vinyl chloride, and vinyl fluoride may, for example, be used as monomers.

A monomer having a hydrophilic functional group such as a hydroxyl group or a carboxyl group is not suitable, since the resulting acrylic resin tends to be hydrophilic and the antifouling property for a long period of time tends to be poor. Accordingly, even if such a monomer is used, its amount should be at most 5 wt%.

The acrylic resin (A) preferably has a weight average molecular weight of from 2,000 to 100,000, more preferably from 5,000 to 50,000, in order to obtain a smooth coating film excellent in various physical and chemical properties.

The metal salt of rosin (B) constituting the binder of the paint composition of the present invention is incorporated, so that it elutes into sea water together with an antifouling agent which may be incorporated as the case requires, to provide antifouling affects.

The rosin of the metal salt of rosin (B) may, for example, be gum rosin, wood rosin or a modified product thereof, such as a malein- or phthal-modified product. As the metal atom, copper, zinc, tellurium, nickel, aluminum or molybdenum may, for example, be mentioned. Particularly preferred is copper or zinc in view of the antifouling effects. In the present invention, if rosin is used instead of the metal salt of rosin, the abrasion property tends to be inadequate, and the antifouling property for a long period of time tends to be poor, such being undesirable.

The binder constituting the antifouling paint composition of the present invention comprises the acrylic resin (A) and the metal salt of rosin (B), as described above, and the weight ratio of the two components is usually from 20:80 to 80:20, preferably from 30:70 to 70:30.

If the acrylic resin (A) is less than the above range, the elution of the coating film tends to be quick, whereby the antifouling effects for a long time cannot be expected. On the other hand, if it is too much, the abrasion property and the antifouling effects tends to decrease.

This binder is diluted to a desired resin concentration by using, as a solvent, an aromatic solvent such as toluene or xylene, a ketone solvent such as methyl ethyl ketone or methyl isobutyl ketone, an ester solvent such as ethyl acetate, butyl acetate or ethylene glycol monoethyl ether acetate, an alcohol solvent such as butyl alcohol, or an ether solvent such as dioxane or tetrahydrofuran, to obtain a vehicle component for the antifouling paint.

The antifouling paint composition of the present invention contains the above binder solution as a vehicle component and may further contain a water-soluble or water-insoluble binder other than the above binder, a known antifouling agent, a coloring pigment, an extender, a solvent, a plasticizer as well as various additives such as a antifoaming agent, a sedimentation-preventing agent and a leveling agent.

As such other binder which may be used as the case requires in the present invention, a water-soluble or water-insoluble polyvinyl ether resin, a vinyl chloride resin, a chlorinated rubber resin, a chlorinated polyethylene resin, a chlorinated polypropylene resin, a water-soluble acrylic resin, a styrene-butadiene resin, a polyester resin, a silicone resin, a silicone rubber resin or a rosin ester may, for example, be mentioned. Such a resin preferably has a Tg within a range of from -60 to 60°C, and its amount is usually at most 20 parts by weight, preferably at most 15 parts by weight per 100 parts by weight of the binder made of the above components (A) and (B).

The antifouling agent which may optionally be used in the present invention, is not particularly limited. It may, for example, be cuprous oxide, basic copper carbonate, copper thiocyanate, copper hydroxide, cuprous rhodanide, manganese ethylenebisdithiocarbamate, zinc dimethyldithiocarbamate, 2-methylthio-4-t-butylamino-6-cyclopropylamino-s-triazine, 2,4,5,6-tetrachloroisophthalonitrile, N,N-dimethylchlorophenylurea, zinc ethylenebisdithiocarbamate, 4,5-dichloro-2-N-octyl-3(2H)isothiazolone, N-(fluorodichloromethylthio)phthalimide, N,N-dimethyl-N'-phenyl(N-fluorodichloromethylthio)sulfamide, tetramethylthiuramdisulfide, N-(3,4-dichlorophenyl)-N,N-dimethylurea, 2,4,6-trichlorophenylmaleimide, or 2-pyridinethiol-l-oxide zinc salt. These antifouling agents may be used alone or in combination as a mixture.

The solvent which may optionally be used in the present invention, may, for example, be the same as the above-mentioned solvent for the binder.

The coloring pigment, the extender, the plasticizer and various additives which may optionally be used in the present invention, may be those which are commonly used for antifouling paints.

The antifouling paint composition of the present invention may suitably be prepared by blending from 15 to 50 wt%, preferably from 20 to 30 wt%, of the above described binder, from 20 to 70 wt%, preferably from 25 to 50 wt%, of a solvent, and from 0 to 45 wt%, preferably from 20 to 40 wt%, of an antifouling agent.

The antifouling paint composition of the present invention is prepared by mixing and dispersing the above resin and other components i.e. by mixing and dispersing them all at once or in a divided fashion by a conventional paint producing apparatus such as a ball mill or disper. The antifouling paint composition thus prepared may be coated directly or after adjusting the viscosity with a solvent, on e.g. ships or marine structures by airless spray coating, air spray coating, roller coating or brush coating, preferably in a thickness after drying of from 30 µm to 300 µm, preferably from 80 µm to 200 µm.

By the present invention, an epoch-making antifouling paint has been obtained which has a long lasting antifouling property substantially equal to a soluble matrix type antifouling paint containing an organotin-containing resin as the binder, and which is excellent in the recoating property and has no substantial problem from the viewpoint of the hygienic safety and protection of environment, since it contains no organotin-containing resin.

Now, the present invention will be described in further detail with reference of Examples. However, it should be understood that the present invention is by no means restricted to such specific Examples. In the Examples, "parts" and "%" mean "parts by weight" and "% by weight", respectively.

### Preparation of an acrylic resin

A mixture comprising a monomer, a polymerization initiator and a solvent, as identified in Table 1, was reacted in accordance with a usual method to obtain an acrylic resin solution (solid content: 50%) having the properties as identified in Table 1.

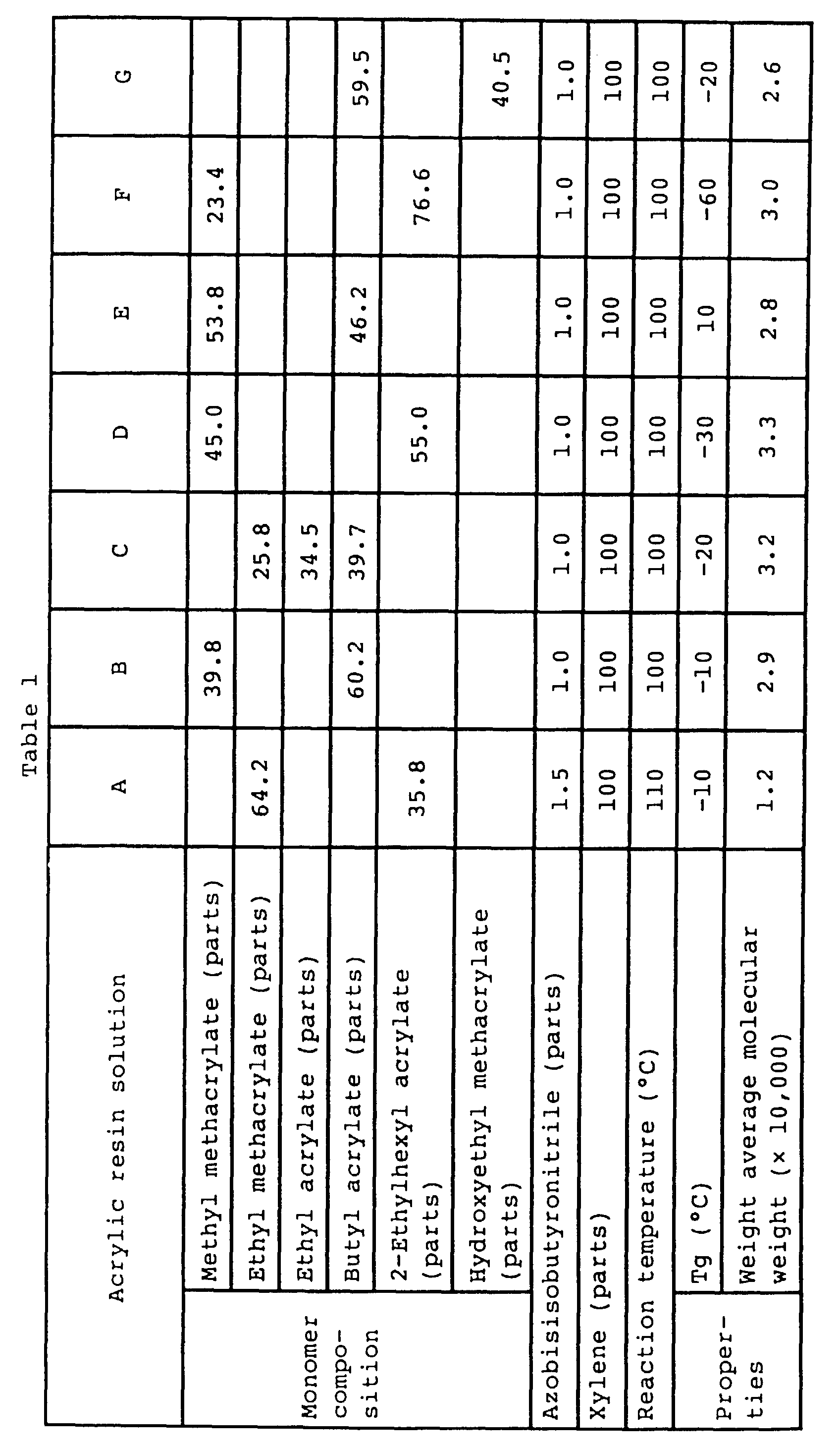

### EXAMPLES 1 TO 8 AND COMPARATIVE EXAMPLES 1 TO 6

The compositions as identified in Tables 2 and 3 were respectively kneaded and dispersed to obtain antifouling paints of Examples 1 to 8 and Comparative Examples 1 to 6. Each of these antifouling paints was coated by air spray coating so that the dried film thickness would be 150 µm on a steel plate having an anticorrosive paint coated thereon, and then dried. With respect to each test plate thus obtained, an abrasion test, a skeleton layer measuring test, an antifouling property test and a recoating property test were carried to obtain the results as shown in Tables 4 and 5. The tests were carried out in accordance with the following methods.

### Abrasion test:

After rotor test (25°C, 7.73 m/s (15 knot)), the film thickness was measured by a micro meter, and the difference from the film thickness before the test was calculated.

### Skeleton layer measuring test:

The cross section of the coating film after the rotor test was inspected by an electron microscope (SEM-EPMA) for elemental analysis, whereby the thickness of the surface layer of the coating film where no distribution of copper or zinc was observed, was measured.

### Antifouling property test:

At Toba Bay in Toba-shi, Mie-ken, Japan, the test plate was immersed in the sea, and the appearance of the coating film was observed.

### Evaluation standard:

- 5:: No deposition on the test plate was observed
- 4:: Deposition of thin slime on the test plate was observed.
- 3:: Deposition of thick slime on the test plate was observed.
- 2:: Slight deposition of large size organisms was observed.
- 1:: Substantial deposition of large size organisms was observed.

### Recoating property test:

A rotor test (25°C, 5.14 m/s (10 knot), 12 months) was carried out to have the coating film deteriorated. Then, the same antifouling paint was coated thereon and subjected again to the rotor test. Six months later, the coating film was inspected.
- ○:: No peeling of the coating film observed.
- Δ:: Peeling was observed at a part of the coating film.
- ×:: Peeling was observed over the entire surface of the coating film.
- ―:: Peeling of the coating film was observed at the initial stage of the rotor test.

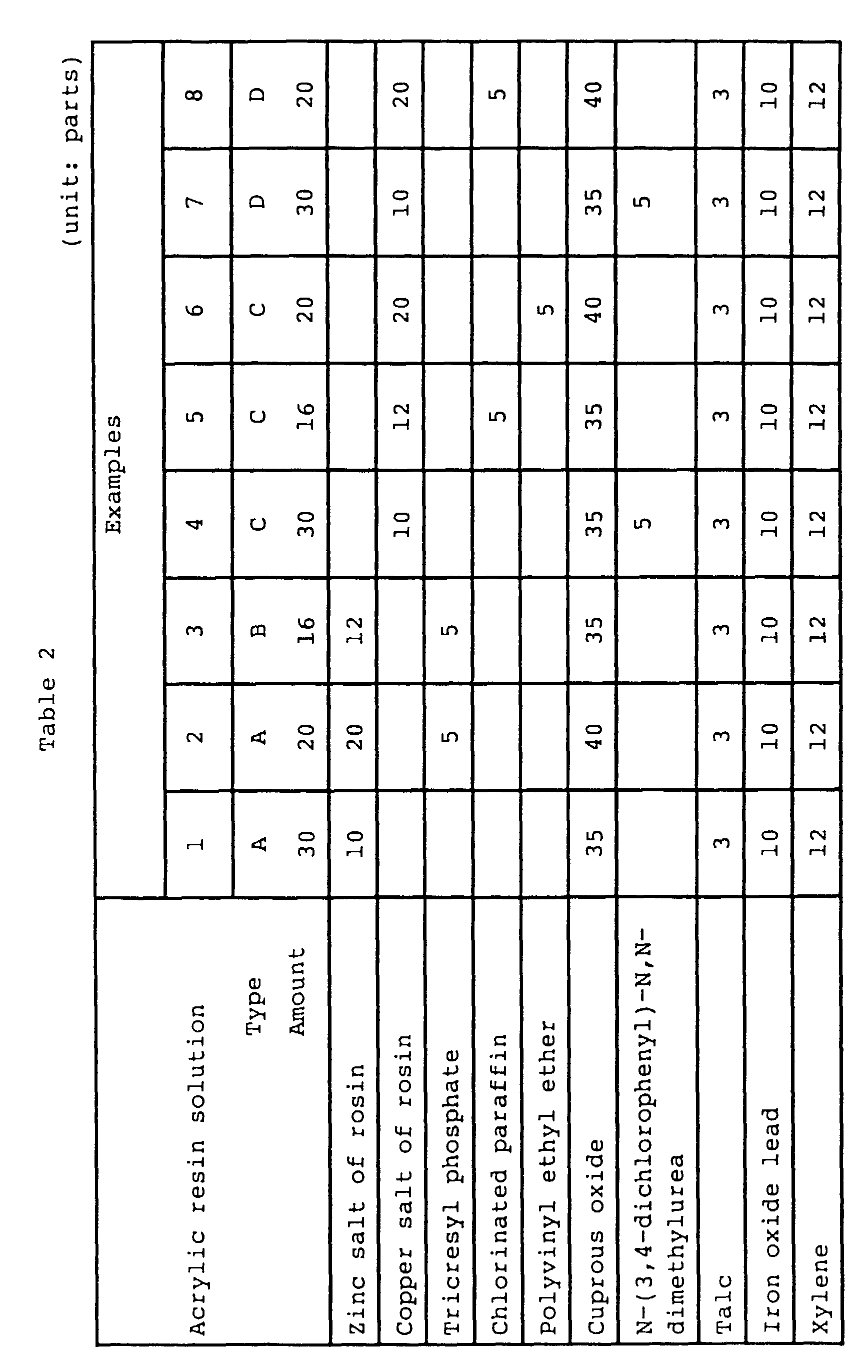

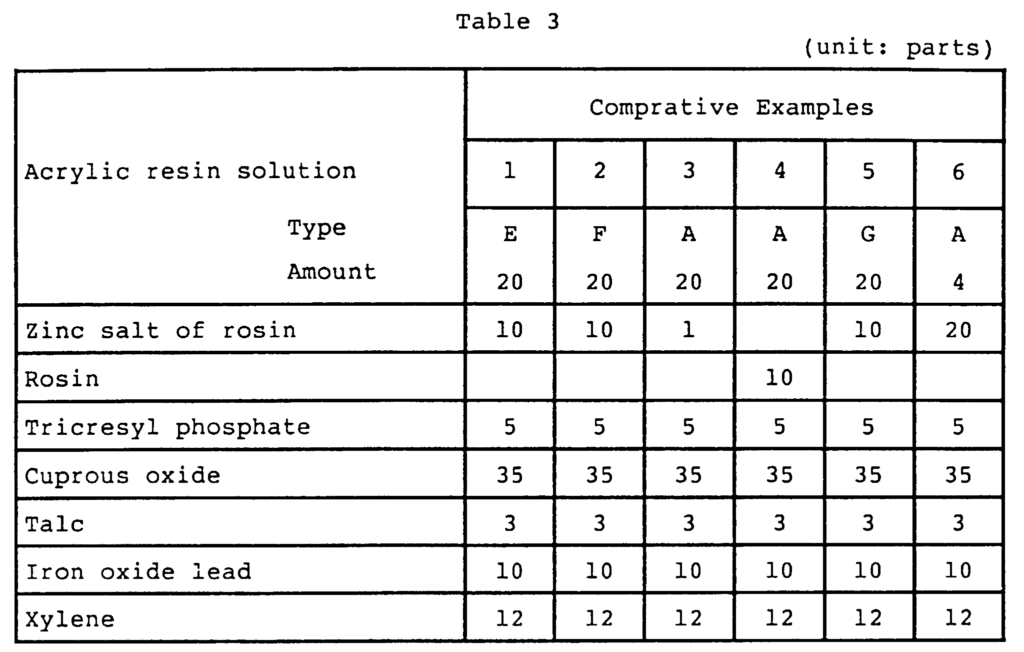

**Table 4**

| | | Examples | | | | | | | |
|---|---|---|---|---|---|---|---|---|---|
| | | 1 | 2 | 3 | 4 | 5 | 6 | 7 | 8 |
| Abrasion property (µm) | 3 months | 16 | 20 | 18 | 22 | 25 | 28 | 30 | 32 |
| | 6 months | 25 | 32 | 30 | 40 | 47 | 51 | 54 | 57 |
| | 9 months | 37 | 50 | 45 | 57 | 69 | 78 | 80 | 85 |
| | 12 months | 48 | 64 | 57 | 73 | 82 | 90 | 94 | 109 |
| Skeleton layer (µm) | 3 months | 3 | 5 | 4 | 2 | 5 | 5 | 3 | 4 |
| | 6 months | 5 | 3 | 4 | 4 | 3 | 5 | 2 | 5 |
| | 9 months | 4 | 4 | 7 | 5 | 5 | 3 | 4 | 3 |
| | 12 months | 5 | 4 | 5 | 3 | 4 | 5 | 5 | 5 |
| Antifouling property | 3 months | 5 | 5 | 5 | 5 | 5 | 5 | 5 | 5 |
| | 6 months | 5 | 5 | 5 | 5 | 5 | 5 | 5 | 5 |
| | 9 months | 5 | 5 | 5 | 5 | 5 | 5 | 5 | 5 |
| | 12 months | 5 | 5 | 5 | 5 | 5 | 5 | 5 | 5 |
| | 18 months | 5 | 5 | 5 | 5 | 5 | 5 | 5 | 5 |
| | 24 months | 5 | 5 | 5 | 5 | 5 | 5 | 5 | 5 |
| Recoating property | | ○ | ○ | ○ | ○ | ○ | ○ | ○ | ○ |

**Table 5**

| | | Comparative Examples | | | | | |
|---|---|---|---|---|---|---|---|
| | | 1 | 2 | 3 | 4 | 5 | 6 |
| Abrasion property (µm) | 3 months | 7 | 55 | 3 | 8 | peeled | 53 |
| | 6 months | 13 | peeled | 5 | 13 | - | peeled |
| | 9 months | 18 | - | 7 | 20 | - | - |
| | 12 months | 20 | - | 9 | 24 | - | - |
| Skeleton layer (µm) | 3 months | 28 | 4 | 3 | 5 | peeled | 23 |
| | 6 months | 55 | peeled | 5 | 11 | - | peeled |
| | 9 months | 72 | - | 4 | 19 | - | - |
| | 12 months | 83 | - | 5 | 27 | - | - |
| Antifouling property | 3 months | 4 | 5 | 4 | 5 | 5 | 5 |
| | 6 months | 4 | 5 | 4 | 4 | 5 | 5 |
| | 9 months | 3 | 5 | 3 | 4 | 4 | 5 |
| | 12 months | 2 | 4 | 2 | 3 | 3 | 4 |
| | 18 months | 2 | 3 | 2 | 3 | 2 | 3 |
| | 24 months | 1 | 2 | 1 | 2 | 1 | 2 |
| Recoating property | | X | - | ○ | △ | - | - |

As is evident from Tables 4 and 5, Examples 1 to 8 representing the antifouling paint compositions of the present invention exhibited excellent abrasion properties and long-lasting antifouling properties, and they also had good recoating properties with very thin skeleton layers.

On the other hand, in Comparative Example 1 wherein an acrylic resin having a high Tg was used, the abrasion property was poor, and both the recoating property and the antifouling property for a long period of time were also poor. In Comparative Example 2, wherein an acrylic resin having a low Tg was used, the abrasion property was too high, and peeling was observed. Further, in Comparative Example 3 wherein the amount of the metal salt of rosin was small, the abrasion property was poor, and the antifouling property for a long period of time was poor. Further, in Comparative Example 4, wherein rosin was used, the abrasion property was inadequate, and the antifouling property for a long period of time was poor. In Comparative Example 5, wherein a hydrophilic acrylic resin was used, peeling was observed, and the antifouling property for a long period of time was poor. In Comparative Example 6 wherein the amount of the acrylic resin was small, the abrasion property was too high, and the antifouling property for a long period of time was poor.

## Claims

1. An antifouling paint composition free from organotin containing, as a binder, a mixture comprising (A) from 20 to 80 wt% of a water-insoluble and hydrophobic acylic resin having a glass transition temperature of from -50 to 0°C and (B) from 80 to 20 wt% of a metal salt of rosin.

2. The antifouling paint composition according to Claim 1, wherein the metal atom of the metal salt of rosin (B) is copper or zinc.

3. The antifouling paint composition according to Claim 1 or 2, which comprises from 15 to 50 wt% of said binder, from 20 to 70 wt% of a solvent and from 0 to 45 wt% of an antifouling agent.

## Patentansprüche

1. Fäulnisverhindernde Anstrich-Zusammensetzung ohne Organozinn enthaltend, als einen Binder, eine Mischung, umfassend (A) von 20 bis 80 Gew.-% eines wasserunlöslichen und hydrophoben Acrylharzes mit einer Glasübergangs-Temperatur von -50 bis 0°C und (B) von 80 bis 20 Gew.-% eines Metallsalzes von Harzsäuren.

2. Fäulnisverhindernde Anstrich-Zusammensetzung nach Anspruch 1, worin das Metallatom des Metallsalzes von Harzsäuren (B) Kupfer oder Zink ist.

3. Fäulnisverhindernde Anstrich-Zusammensetzung nach Anspruch 1 oder 2, umfassend von 15 bis 50 Gew.-% des Binders, von 20 bis 70 Gew.-% eines Lösungsmittels und 0 bis 45 Gew.-% eines fäulnisverhindernden Mittels.

## Revendications

1. Composition de peinture antisalissure, exempte d'organo-étain, contenant en tant que liant un mélange comprenant (A) de 20 à 80 % en poids d'une résine acrylique hydrophobe et insoluble dans l'eau, ayant une température de transition vitreuse de -50 à 0°C et (B) de 80 à 20 % en poids d'un sel métallique de colophane.

2. Composition de peinture antisalissure selon la revendication 1, dans laquelle l'atome de métal du sel métallique de colophane (B) est le cuivre ou le zinc.

3. Composition de peinture antisalissure selon la revendication 1 ou 2, qui comprend de 15 à 50 % en poids dudit liant, de 20 à 70 % en poids d'un solvant et de 0 à 45 % en poids d'un agent antisalissure.
